# EUROPÄISCHE PATENTANMELDUNG

(11) **EP 4 091 883 A1**
(43) Veröffentlichungstag der Anmeldung: **23.11.2022**
(21) Anmeldenummer: 22176808.8
(22) Anmeldetag: 09.04.2020
(51) Int. Cl.: B60R 13/02, B29C 45/16, B60Q 3/54, B60Q 3/62

(54) **VERKLEIDUNGSTEIL FÜR EINEN FAHRZEUGINNENRAUM GEBILDET ALS SPRITZGUSS-MEHRKOMPONENTENBAUTEIL**

(30) Priorität: 03.05.2019 DE 102019111547
(62) Teilanmeldung aus: 20719598.3
(71) Anmelder: HIB Trim Part Solutions GmbH, 76646 Bruchsal (DE)
(72) Erfinder: Röchert, Michael, 75203 Königsbach-Stein (DE); Sabuncuoglu, Mustafa, 69502 Hemsbach (DE)
(74) Vertreter: Staeger & Sperling Partnerschaftsgesellschaft mbB

(57) **Zusammenfassung**

Die Erfindung betrifft ein Verkleidungsteil (1) ausgeführt für einen Fahrzeuginnenraum und ausgebildet hinterleuchtet oder durchleuchtet zu werden, wobei das Verkleidungsteil (1) ein Trägerteil (3) ausgebildet zur Befestigung des Verkleidungsteils (1) im Fahrzeuginnenraum umfasst, welches Trägerteil (3) als Spritzguss-Mehrkomponentenbauteil aus mindestens zwei unterschiedlichen Kunststoffen gebildet ist, wobei ein erster Kunststoff als Hartkomponente und ein zweiter Kunststoff als Weichkomponente im Spritzguss miteinander verbunden sind, und wobei das Verkleidungsteil (1) mindestens eine Lichtleiteraufnahme (2) zur befestigenden und von dem Trägerteil (3) entkoppelten Aufnahme mindestens eines Lichtleiters (5) aufweist und die Lichtleiteraufnahme (2) aus der Weichkomponente des Trägerteils (3) gebildet ist.

## Beschreibung

Die Erfindung betrifft ein Verkleidungsteil ausgeführt für einen Fahrzeuginnenraum gebildet als Spritzguss-Mehrkomponentenbauteil.

Gattungsbildende Spritzguss-Mehrkomponentenbauteile sind in der Technik als 2K-Bauteile bekannt, bei denen zwei Kunststoffe im Spritzguss verarbeitet werden, wobei der erste Kunststoff eine Hartkomponente und der zweite Kunststoff eine Weichkomponente bildet. Die Weichkomponente dient als physikalische Entkopplung und fungiert dabei als eine Art Dämpfungselement zwischen angrenzenden Kunststoffbauteilen, die bei Relativbewegungen sonst unerwünschte Knarzgeräusche verursachen können. Dies ist insbesondere bei Fahrzeugteilen problematisch, die im Innenraum verbaut werden, da Fahrzeugpassagiere sensibel auf derartige Geräusche reagieren und diese als besonders lästig empfinden. Gleichzeitig wird die Wertigkeit des Produktes negativ beurteilt, wenn es während der Fahrt derartige Geräusche erzeugt.

In neueren Entwicklungen werden Verkleidungsteile häufig mit einer Beleuchtung oder Hinterleuchtung versehen. Das hierfür benötigte Licht wird über Lichtleiter an die beleuchtenden Stellen geleitet. Die Lichtleiter werden dabei in das Verkleidungsteil oder eine daran ausgebildete Aufnahme geklipst, welche an einem Grundkörper des Verkleidungsteils vorgesehen ist. Dabei ist problematisch, dass die für die Beleuchtung benötigten Bauteile, insbesondere die Führung der Lichtleiter über Lichtleiteraufnahmen bei Relativbewegungen selbst unerwünschte Geräusche erzeugen können.

Druckschriftlicher Stand der Technik aus dem vorliegenden technischen Gebiet ist aus den Dokumenten DE 10 2010 039 270 A1 und EP 3 575 153 A1 bekannt.

Der Erfindung liegt deshalb die Aufgabe zugrunde, ein beleuchtbares oder hinterleuchtbares Verkleidungsteil mit Geräuschentkopplung bereitzustellen.

Diese Aufgabe wird durch die Merkmalskombination gemäß Patentanspruch 1 gelöst.

Erfindungsgemäß wird ein Verkleidungsteil, ausgeführt für einen Fahrzeuginnenraum und ausgebildet hinterleuchtet oder durchleuchtet zu werden, vorgeschlagen. Das Verkleidungsteil umfasst ein Trägerteil ausgebildet zur Befestigung des Verkleidungsteils im Fahrzeuginnenraum, wobei das Trägerteil als Spritzguss-Mehrkomponentenbauteil aus mindestens zwei unterschiedlichen Kunststoffen gebildet ist. Bei dem Trägerteil des Verkleidungsteils sind ein erster Kunststoff als Hartkomponente und ein zweiter Kunststoff als Weichkomponente im Spritzguss miteinander verbunden. Ferner weist das Verkleidungsteil mindestens eine Lichtleiteraufnahme zur befestigenden und von der Hartkomponente des Trägerteils entkoppelten Aufnahme mindestens eines Lichtleiters auf, wobei die Lichtleiteraufnahme aus der Weichkomponente des Trägerteils gebildet ist.

Die Lichtleiteraufnahme wird als Weichkomponente an das Trägerteil mit angespritzt und verhindert, dass im Einsatz, z.B. während der Fahrt, Geräusche durch eine Relativbewegung der Lichtleiteraufnahme gegenüber dem Trägerteil entstehen. Auch wird der in die Lichtleiteraufnahme einzulegende Lichtleiter von dem Trägerteil und somit der Hartkomponente entkoppelt. Zusätzliche Montageschritte für die Befestigung der Lichtleiteraufnahme können entfallen, so dass auch Fehlmontagen ausgeschlossen sind.

Bei dem Verkleidungsteil überdeckt die Weichkomponente vorzugsweise eine Oberfläche des Trägerteils, welche an die mindestens eine Lichtleiteraufnahme angrenzt. Es besteht somit ein unmittelbarer Übergang zwischen dem Teil der Weichkomponente, welche als Geräuschentkopplung auf dem Trägerteil flächig aufgebracht wird und der Lichtleiteraufnahme, welche ebenfalls zur Geräuschentkopplung beiträgt. Die Weichkomponente ist somit vorzugsweise einstückig an dem Trägerteil vorgesehen.

In einer Ausführungsvariante des Verkleidungsteils ist vorgesehen, dass die Lichtleiteraufnahme teilweise aus von dem Trägerteil vorstehenden Stegen aus der Hartkomponente gebildet ist, wobei die Stege zwischen sich einen mit der Weichkomponente ausgespritzten Einlegekanal für den Lichtleiter bilden. Das Trägerteil kann somit durch die Stege strukturelle Elemente bereitstellen, welche eine Führung für die Lichtleiter bieten. Die zusätzlich vorgesehene Weichkomponente bildet jedoch die Anlagefläche des Einlegekanals für die Lichtleiter, so dass im montierten Zustand kein direkter Kontakt zwischen dem Lichtleiter und der Hartkomponente besteht.

Vorzugsweise werden an dem Trägerteil des Verkleidungsteils mehrere Lichtleiteraufnahmen in Reihe angeordnet, welche den Lichtleiter an dem Verkleidungsteil entkoppelt von dem Trägerteil fixieren. Der Lichtleiter ist somit über die notwendige Erstreckung entlang des Verkleidungsteils über die jeweiligen Lichtleiteraufnahmen führbar, um die Beleuchtung oder Hinterleuchtung über die gewünschte Erstreckung des Verkleidungsbauteils gleichmäßig zu gewährleisten.

Eine Weiterbildung des Verkleidungsteils ist dadurch gekennzeichnet, dass an der mindestens einen Lichtleiteraufnahme unmittelbar angrenzend oder diese überdeckend eine Streuscheibe angeordnet ist. Mittels der Streuscheibe kann das über eine Einkoppelelement in den Lichtleiter eingekoppelte Licht gestreut werden, so dass eine homogene Ausleuchtung über eine Fläche gewährleistet ist.

Ferner ist erfindungsgemäß vorgesehen, dass das Verkleidungsteil mindestens ein LED-Modul aufweist, mit dem der mindestens eine Lichtleiter verbunden ist. Über das LED-Modul wird das Licht für die Hinterleuchtung bzw. Durchleuchtung des Verkleidungsbauteils erzeugt. Dabei sieht eine vorteilhafte und erfindungsgemäße Lösung vor, dass das mindestens eine LED-Modul an dem Trägerteil an einer Modulaufnahme befestigt ist, die vorzugsweise durch die Weichkomponente gebildet ist. Somit ist auch die LED-Modulaufnahme geräuschentkoppelt.

In einer Weiterbildung weist das Verkleidungsteil eine Dekorlage auf, welche auf einer Sichtseite des Verkleidungsteils an dem Trägerteil befestigt ist. Als Dekorlage können beispielsweise Furniere oder Gewebe dienen, welche die Sichtseite des Verkleidungsteils bereitstellen. Die Dekorlage wird vollständig oder abschnittsweise durchleuchtet oder hinterleuchtet, um beispielsweise einen rahmenartigen Leuchtstreifen zu erzeugen.

In einer Ausführungsvariante des Verkleidungsteils werden die Dekorlage und die Streuscheibe nebeneinander in derselben Ebene angeordnet, so dass eine unmittelbare Beleuchtung mittels des Lichtleiters durch die Streuscheibe ermöglicht ist. Von der Sichtseite ist dann die Dekorlage mit angrenzender unmittelbar hinterleuchteter Streuscheibe zu erkennen, welche beispielsweise den Rahmen oder ein Rahmenelement des Verkleidungsteils bildet.

Die Hartkomponente wird in einer für die Erfindung günstigen Ausführung beispielsweise aus PC/ABS (Polycarbonate/Acrylnitril Butadien Styrol) insbesondere mit einem Glasfaseranteil, die Weichkomponente aus einem thermoplastischen Elastomer (TPE) gebildet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Explosionsdarstellung eines Verkleidungsteils zur Befestigung an einem Modul-Bauteil;
- Fig. 2: das schematische Verkleidungsteil gemäß Figur 1 im montierten Zustand.

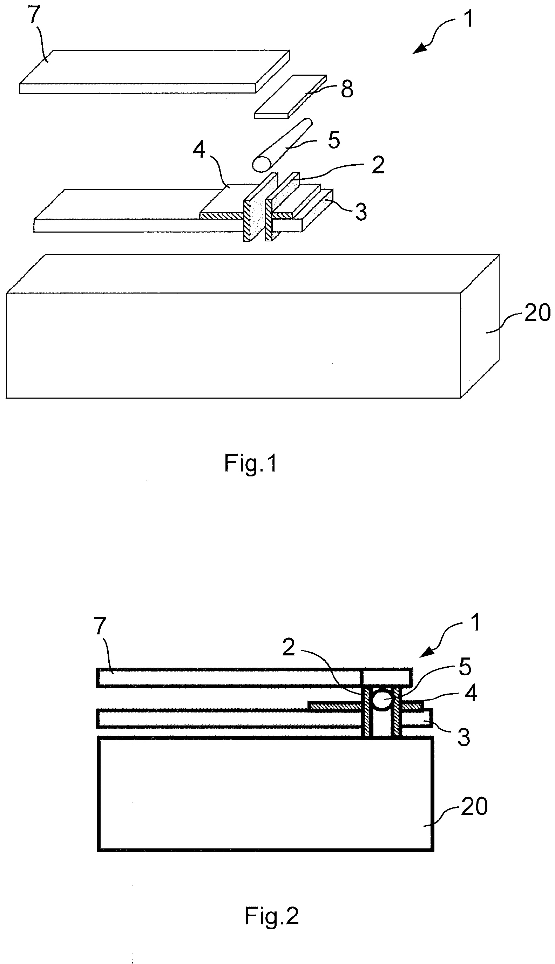

Die Figuren 1 und 2 sind lediglich beispielhaft schematisch und dienen zum besseren Verständnis der Offenbarung. Gezeigt ist das Verkleidungsteil 1 zur Befestigung an einem Modul-Bauteil 20, welches beispielsweise ein Armaturenbrett oder eine Tür eines Kraftfahrzeugs sein kann.

Das Verkleidungsteil 1 umfasst das Trägerteil 3, mit dem es an der Modul-Bauteil 20 befestigt wird. Zur Sichtseite weisend ist auf dem Trägerteil 3 die Dekorlage 7 angeordnet. Die Dekorlage 7 bildet das wesentliche Element, dass der Benutzer von dem Verkleidungsteil 1 erkennt. Seitlich in derselben oder nahezu derselben Ebene angrenzend an die Dekorlage 7 ist in der gezeigten Ausführung die Streuscheibe 8 vorgesehen, welche den mit dem LED-Modul (nicht gezeigt) verbundenen Lichtleiter 5 überdeckt. Über den Lichtleiter 5 wird das Licht durch die Streuscheibe 8 verteilt, so dass das Verkleidungsteil 1 eine Art einseitig beleuchteten Rahmen aufweist. In einer nicht gezeigten alternativen Ausführung kann die Streuscheibe 8 auch zur Dekorlage 7 überstehend oder unterstehend gebildet sein.

Das Trägerteil 3 des Verkleidungsteils 1 ist als Spritzguss-Mehrkomponentenbauteil mit zwei unterschiedlichen Kunststoffen gebildet. Flächig auf der Oberfläche des Trägerteils 3 ist die Weichkomponente 4 verteilt und bildet eine Geräuschentkopplung gegenüber angrenzenden Bauteilen, beispielsweise der Dekorlage 7 oder dem Modul-Bauteil 20. Wenn auch nicht gezeigt, so kann die Weichkomponente 4 des Trägerteils 3 hierfür auch auf der zum Modul-Bauteil 20 weisenden Oberfläche des Trägerteils 3 vorgesehen werden. Die Weichkomponente 4 bildet jedoch in jedem Fall die Lichtleiteraufnahme 2 zur befestigenden und von der Hartkomponente des Trägerteils 3 entkoppelten Aufnahme des Lichtleiters 5. In den Figuren ist dies vereinfacht dargestellt, jedoch kann an dem Trägerteil 3 auch eine Stegkonstruktion vorgesehen werden, welche eine Art Rahmenstruktur für die Lichtleiteraufnahme 2 bestimmt, die dann mit der Weichkomponente umspritzt wird. Somit ergibt sich ein Einlegekanal aus der Weichkomponente für den Lichtleiter 5.

Die Streuscheibe 5 liegt auf der Lichtleiteraufnahme 2 gebildet aus der Weichkomponente auf und ist mithin ebenfalls geräuschentkoppelt. Der Lichtleiter 5 ist stangeartig dargestellt, kann alternativ jedoch auch aus einer oder mehreren Lichtplatten gebildet werden.

## Patentansprüche

1. Verkleidungsteil (1) ausgeführt für einen Fahrzeuginnenraum und ausgebildet hinterleuchtet oder durchleuchtet zu werden, wobei das Verkleidungsteil (1) ein Trägerteil (3) ausgebildet zur Befestigung des Verkleidungsteils (1) im Fahrzeuginnenraum umfasst, welches Trägerteil (3) als Spritzguss-Mehrkomponentenbauteil aus mindestens zwei unterschiedlichen Kunststoffen gebildet ist, wobei ein erster Kunststoff als Hartkomponente und ein zweiter Kunststoff als Weichkomponente im Spritzguss miteinander verbunden sind, und wobei das Verkleidungsteil (1) mindestens eine Lichtleiteraufnahme (2) zur befestigenden und von dem Trägerteil (3) entkoppelten Aufnahme mindestens eines Lichtleiters (5) aufweist und die Lichtleiteraufnahme (2) aus der Weichkomponente des Trägerteils (3) gebildet ist, **dadurch gekennzeichnet, dass** das Verkleidungsteil mindestens ein LED-Modul aufweist, mit dem der mindestens eine Lichtleiter (5) verbunden ist, und dass das mindestens eine LED-Modul an dem Trägerteil (3) an einer Modulaufnahme befestigt ist, wobei die Modulaufnahme durch die Hartkomponente oder die Weichkomponente gebildet ist.

2. Verkleidungsteil nach Anspruch 1, **dadurch gekennzeichnet, dass** die Weichkomponente eine Oberfläche des Trägerteils (3) überdeckt, welche an die mindestens eine Lichtleiteraufnahme (2) angrenzt.

3. Verkleidungsteil nach Anspruch 1 oder 2, **dadurch gekennzeichnet, dass** die Lichtleiteraufnahme (2) teilweise aus von dem Trägerteil (3) vorstehenden Stegen aus der Hartkomponente gebildet ist, wobei die Stege zwischen sich einen mit der Weichkomponente ausgespritzten Einlegekanal für den Lichtleiter (5) bilden.

4. Verkleidungsteil nach einem der vorigen Ansprüche, **dadurch gekennzeichnet, dass** an dem Trägerteil (3) mehrere Lichtleiteraufnahmen (2) in Reihe angeordnet sind, welche den Lichtleiter (5) an dem Verkleidungsteil (1) entkoppelt von dem Trägerteil (3) fixieren.

5. Verkleidungsteil nach einem der vorigen Ansprüche, **dadurch gekennzeichnet, dass** an der mindestens einen Lichtleiteraufnahme (2) unmittelbar angrenzend oder diese überdeckend eine Streuscheibe (8) angeordnet ist.

6. Verkleidungsteil nach einem der vorigen Ansprüche, **dadurch gekennzeichnet, dass** es eine Dekorlage (7) aufweist, welche auf einer Sichtseite des Verkleidungsteils (1) an dem Trägerteil (3) befestigt ist, wobei der Lichtleiter (5) eine indirekte Beleuchtung für die Dekorlage (7) bildet.

7. Verkleidungsteil nach dem vorigen Anspruch, **dadurch gekennzeichnet, dass** die Dekorlage (7) und die Streuscheibe (8) nebeneinander in derselben Ebene angeordnet sind.

8. . Verkleidungsteil nach einem der vorigen Ansprüche, **dadurch gekennzeichnet, dass** die Hartkomponente aus einem thermoplastischen Kunststoff, insbesondere aus PC/ABS (Polycarbonate/Acrylnitril Butadien Styrol) mit einem Glasfaseranteil und die Weichkomponente aus einem thermoplastischen Elastomer (TPE) gebildet ist.
